# EUROPEAN PATENT APPLICATION

(11) **EP 1 717 489 A2**
(43) Date of publication of application: **02.11.2006**
(21) Application number: 06113271.8
(22) Date of filing: 28.04.2006
(51) Int. Cl.: F16H 57/04

(54) **Epicycloidal-gear multiplier / reducer useable in wind generators and similar devices**

(30) Priority: 29.04.2005 ES 200501053
(71) Applicant: Pujol Muntala S.A., 08272 Barcelona (ES)
(72) Inventor: Tubau I Bertomeus, Josep Pujol Muntala, S.A., Saint Fruitós de Bages 08272 Barcelona (ES); Pozo Gallego, Manuel Pujol Muntala, S.A., Saint Fruitós de Bages 08272 Barcelona (ES)
(74) Representative: Pons Arino, Angel

(57) **Abstract**

Epicycloidal-gear multiplier/reducer useable in wind turbines and similar devices; which includes some epicycloidal gears with a planet carrier part, the Planet Gears (6) of which mesh between a fixed outer crown (2) and a central sun gear (7), the shaft (8) of which runs concentrically through the inside of another shaft (9) to which it is locked, and the outer shaft of which is mechanically coupled to another parallel shaft (11) which comprises the fast shaft of the apparatus. The movement between the sun gear (7) and its concentric outer shaft (9) is locked together by means of contraction rings (10), a lubrication shaft (19) running through the inside of the planet carrier part on the inside of which some lines (22) are built, through which lubricant flows and which end in some jets (25) which act directly on the areas of wear.

## Description

### OBJECT OF THE INVENTION

The present invention entails an epicycloidal-gear multiplier/ reducer useable in wind turbines and similar devices which may also be used, generally speaking, in any other application which requires the gearing up or down of the turning speed of a shaft.

### BACKGROUND OF THE INVENTION

High-powered wind turbines have a speed-increaser located between the rotor and the alternator, given the air propels the rotor at too slow a speed to generate electricity under suitable working conditions.

These speed increasers are implemented based on planetary epicycloidal gears with some Planet Gears attached to a planet carrier which run between a stationary peripheral crown the teeth of which are pointed inward and a central sun gear gear, the slow shaft of the apparatus being comprised of the planet carrier shaft.

On its part, the sun gear shaft, referred to as the sun gear shaft hereinafter, is a medium-speed stage which runs through the inside and concentrically to another outer shaft, both of these shafts turning locked together, and this outer shaft being mechanically coupled by means of multiplier-related gears connected to another parallel shaft comprising the fast shaft of the apparatus. In the case of wind turbines, the rotor is fixed to the (slow) shaft of the planet carrier part, and the alternator to the parallel fast shaft, although the apparatus may also function the other way around, as a reducer, in other applications.

These apparatuses for use in wind turbines are of limited maximum dimensions, given that they must fit inside the small space inside the wind generator nacelle. These size limitations likewise limit the working power of the multiplier, as it is conditioned by the size of its internal elements. The planetary stage has a particular impact on the limitation of the maximum power, given that an increase in the power would entail the enlargement of the planet bearings, which would entail the enlargement of the proper Planet Gears and therefore also the enlargement of the crown and consequently the enlargement of the entire multiplier. As there is no space for this enlargement of the wind turbine, or for the lengthening thereof, this seems to be an unsolvable problem which limits the maximum power of 1600 kW wind turbines in this application in particular.

On the other hand, problems also come to bear with regard to lubricating their inner parts, given that this lubrication is currently done by immersion in lubricating fluid which fills a box configured at the bottom of the frame housing the multiplier/ reducer. Therefore, the gears are only lubricated (or re-lubricated) when they move through the lower position and come into contact with the lubricant built up in the box. This limits their useful life and shortens the maintenance periods, given that the lubrication, in addition to being periodic, is carried out in a lubricant in which the impurities progressively build up and which, on not being cooled, progressively builds up heat. This problem is also further worsened with the pretended increase in power of the multiplier.

Likewise, it would be desirable for the sun gear to remain in contact with the Planet Gears in order to provide a equal distribution of the loads. It is for this purpose that the sun gear is left relatively free in order to adjust itself by means of radial movements to balance the loads. To allow these radial movements, the sun gear shaft is mechanically coupled to the outer concentric shaft by means of a toothed or grooved coupling with convex teeth on one end of the sun gear shaft. Although this coupling allows the radial movements of the sun gear, it is built such that it generates considerable friction forces which give rise to the corresponding power losses and the wearing of the parts in contact, which are greater, the higher-powered the apparatus. In addition thereto, this design does not allow for easy dismantling of the sun gear, making it necessary to dismantle the entire multiplier.

### DESCRIPTION OF THE INVENTION

The multiplier/reducer of the invention is optimally built to make it possible to increase the working power and useful life thereof and, incidentally, simplifies the maintenance and dismantling of the sun gear shaft.

According to this invention, the multiplier/reducer of the invention is of the type of those described, with a planet carrier part, the shaft of which comprises the slow shaft of the apparatus, and a static outer crown with teeth pointing inward and a central sun gear between which the Planet Gears mounted on the planet carrier move, the sun gear extending along a sun gear shaft which runs concentrically and along the inside of another outer shaft, both of which turn locked together, and this outer shaft being coupled by means of gears in multiplying ratio to another parallel shaft comprising the fast shaft of the apparatus.

The improvements entailed in this invention are aimed at allowing the increase of the working power of the apparatus and at reducing maintenance. To this end, it is proposed to implement the planet gears on the outer path proper of its bearings by directly machining the teeth on these outer paths, thus making the gears and their bearings "share" the available space by way of increasing the size and safety factors thereof, such that they will be capable of absorbing the increase in working power of the apparatus, which may be as high as 1800 kW.

In parallel thereto, it has been planned for an axial extension of the planet carrier part (referred to hereinafter as the lubrication shaft) to run through the inside of the sun gear, through the inside of which some ducts have been made, through which the lubricating fluid runs driven by a rotary pump and suctioned from the housing , and which can be made to previously flow through a filter for the purpose of eliminating the impurities. The lubrication shaft of the planet carrier part in the application for wind turbines is hollow, given that access to the cables or controls for regulating the pitch of the wind turbine rotor blades is necessary. In this case, the ducts through which the lubricant flows are implemented by lining the lubrication shaft space such that there will be a noticeably ring-shaped area between the lining and the shaft proper, though which the lubricant will flow. In both cases (solid or hollow lubrication shaft), the lines branch out through the inside of the planet carrier and through the round-headed bolts which hold the planet bearings in place, to end in jets applying clean oil directly onto all of the gears of the apparatus and on the aforementioned bearings, thus increasing the output, making it possible to increase the power, lengthening the maintenance periods and, incidentally, the useful life of the apparatus.

Also for the purpose of increasing the output and lowering the maintenance costs, it is proposed to lock the sun gear shaft together to its outer concentric shaft by means of contraction rings instead of by means of tooted or grooved couplings, thus totally eliminating any friction and thus the wear and power losses. This configuration additionally makes it possible, by suitably dimensioning the sun gear and the outer concentric shaft, to easily remove the gear and sun gear shaft through the inside of said concentric shaft by solely loosening the contraction ring without having to dismantle the entire apparatus.

### BRIEF DESCRIPTION OF THE FIGURES

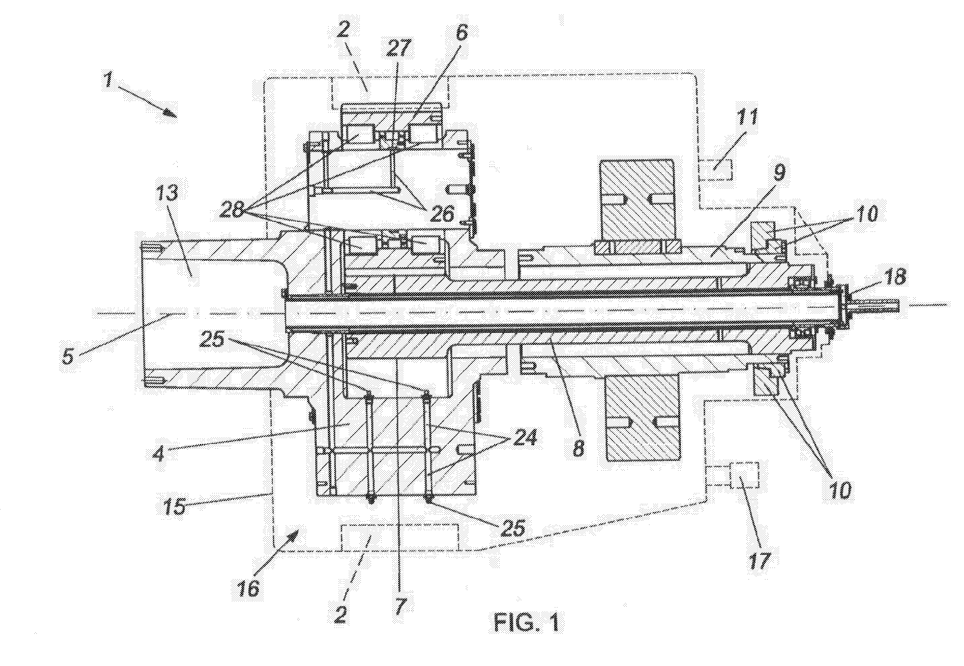

Fig. 1 shows a cross-section of the apparatus of the invention.

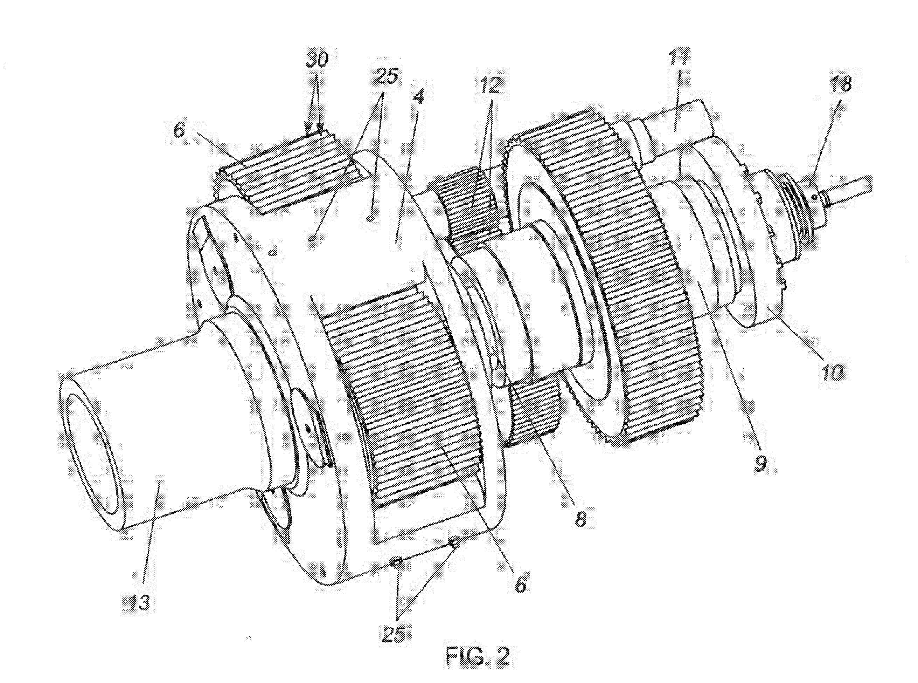

Fig. 2 provides one view of the rotating parts of the apparatus of the invention.

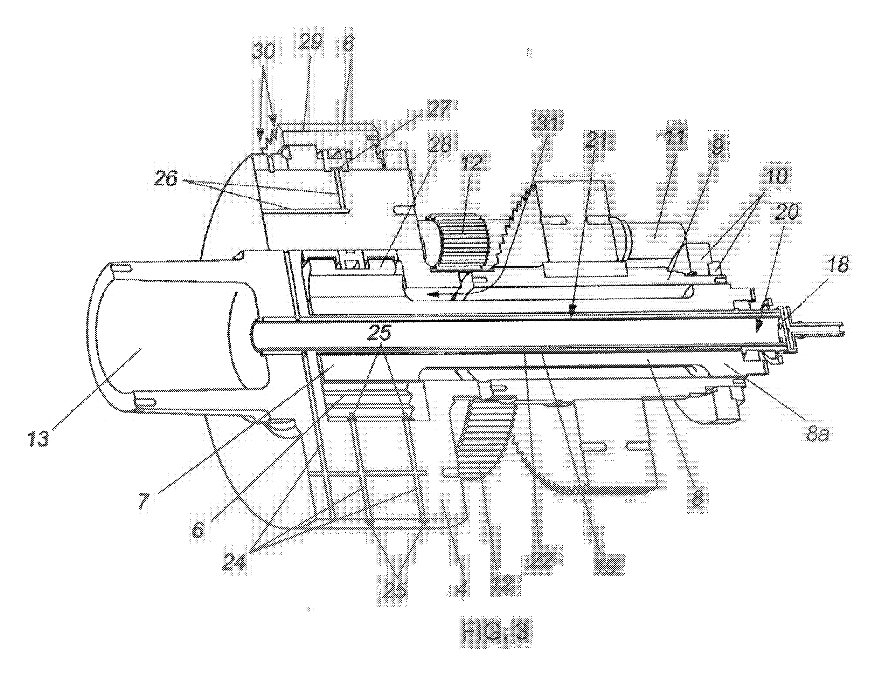

Fig. 3 shows a diametral section of the main elements of Fig 2.

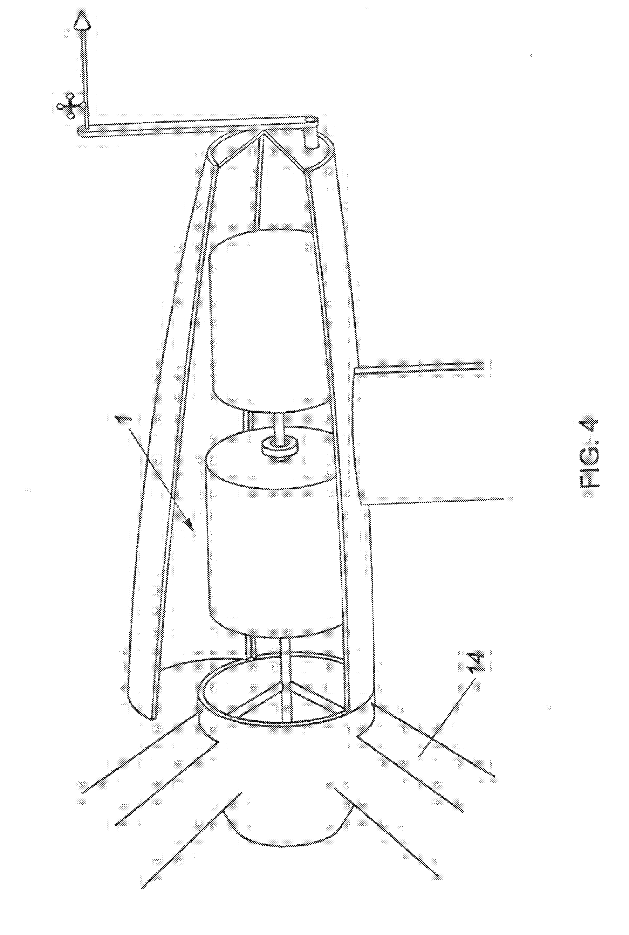

Fig. 4 shows a diagram of circuits through which the lubricant flows.

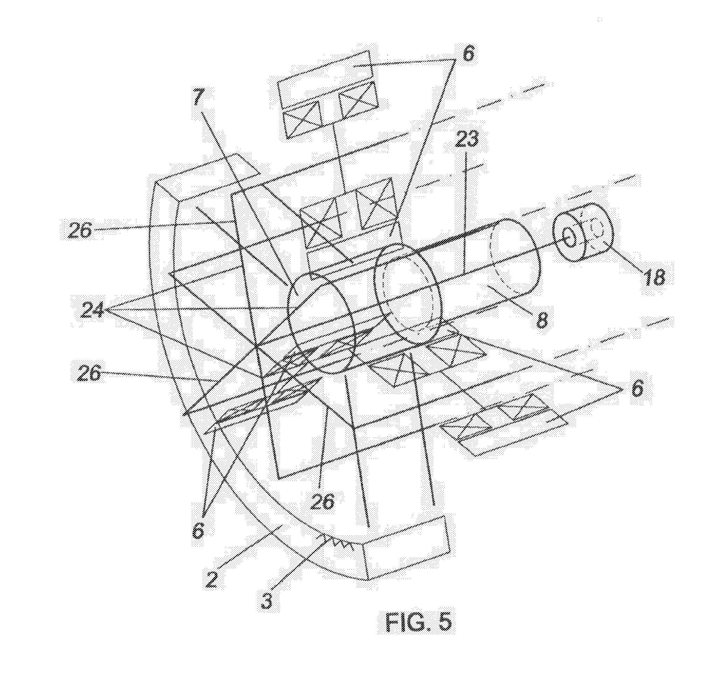

Fig. 5 provides a view of a wind turbine showing the apparatus of the invention.

### DESCRIPTION OF AN EMBODIMENT OF THE INVENTION

The multiplier/reducer 1 of the invention is comprised of a perimetral static ring-shaped crow 2 with teeth 3 pointing inward.

Inside the crown, a planet carrier4 turns, the shaft 5 of which comprises the slow shaft of the apparatus, on which some satellite gears 6 are mounted, which, in turn, mesh with a central sun gear central 7 which comprises a medium-speed stage of the apparatus.

From gear 7 originates a sun gear shaft 8 which runs concentrically and through the inside of another outer shaft 9, the turning of the two being locked together at in an end area 8a of sun gear 8 broadened by means of contraction rings 10.

On its part, the outer shaft 9 is mechanically coupled to another parallel shaft 11 each by means of pinions 12 with multiplying ratio, shaft 11 comprising the fast shaft of the apparatus.

The planet carrier part is fitted in this non-limiting example of the invention, with an emergent collar 13 to which, for example, a wind turbine rotor 14 can be attached, whilst the alternator would be coupled to shaft 11.

The multiplier has a outer housing 15, the lower inside part of which comprises an oil sump 16 for holding lubricating fluid where the different gears are lubricated directly by immersion. In parallel to this immersion lubrication, provision has been made for forced lubrication, for which purpose the sump is fitted with a suction intake 17 for the lubricant which, by means of a rotary pump 18, is injected through some lines implemented inside a lubrication shaft 19 of the planet carrier part 4, this shaft 19 running through the inside of and concentrically to the sun gear shaft 8. By taking advantage of this flow of the lubricant, the lubricant can be made to flow through some filters, not shown, for its cleaning.

The lubrication shaft 19 of the planet carrier part may be either solid or hollow, as is shown in the figures as a non-limiting example of the invention.

In this second case, common in wind turbines, the central hollow space 20, allows for running the rotor pitch control cables, and for the same the lubricant circulation ducts 23 can be built into the space 21 existing between the inside of the shaft 19 and an inner lining 22. In any case, these lines 14 branch out at the body of the planet carrier part into other lines 24 which end in some jets 25 arranged peripherally and aimed at toward the crown and sun gear , the mission of which is the direct lubrication thereof. Likewise, the lines 23 branch out into other lines 26 which run through the inside of the roundhead bolts of the planet bearings 28, ending in the corresponding jets 27 which lubricate them directly with clean oil. It is thus possible to absorb the increase in power without problems and, incidentally, to lengthen the useful life and maintenance periods.

On their part, the bearings 28 entail the special aspect of their own outer path 29 having machined teeth 30 comprising the planet gear, instead of implementing them in a separate lining, which makes the enlargement of these teeth and of the bearing possible to adapt to the safety factors required by the increase in the rated power of the multiplier.

Lastly, taking advantage of the overall build of the multiplier, it shall be sought to suitably dimension the elements thereof to facilitate its dismantling, by proposing, firstly, that the outer diameter of the sun gear gear 7 be smaller than the inner diameter of the shaft 9, and likewise by implementing, on the planet carrier part, a window 31 larger in diameter than the sun gear gear, which will make it possible to remove this gear 6 axially solely by dismantling the contraction rings.

The nature of the invention as well as the embodiment thereof having been sufficiently described, it must be stated that the aforementioned provisions shown in the attached drawings are subject to minor modifications insomuch as they do not alter the main principle.

## Claims

1. Epicycloidal-gear multiplier/reducer useable in wind turbines and similar devices; of the type including epicycloidal gears with a planet carrier part the shaft of which comprises the slow shaft of the apparatus and the Planet Gears of which are in movement on meshing between a fixed outer crown and a central sun gear which extends along a sun gear shaft that runs concentrically through the inside of another outer shaft to which it is locked, and the shaft of which is mechanically coupled by means of multiplier gears to another parallel shaft which comprises the fast shaft of the apparatus; and incorporating an outer housing, the bottom inside part of which comprises a box for immersion lubricating the different gears; **characterized in that** the movement between the sun gear shaft and its concentric outer shaft is locked thereto by means of contraction rings; through the inside of the sun gear shaft runs, in turn, a lubrication shaft of the planet carrier part, on the inside of which some lines are built, though which the lubricant suctioned from the sump by a rotary pump flows and which end in some jets which act directly on the areas of wear.

2. Multiplier/reducer according to Claim 1 hereinabove, **characterized in that** the contraction rings act on an area at the end of the sun gear shaft provided with a broadened adjustment area on the concentric shaft thereof capable of withstanding the tightening made by said contraction rings.

3. Multiplier/reducer according to Claim 1 hereinabove, **characterized in that** the axial lubrication shaft of the planet carrier part is solid.

4. Multiplier/reducer according to Claim 1 hereinabove, **characterized in that** lubrication shaft off the planet carrier part is hollow on the order of allowing for the running of cables or other elements through the inside thereof.

5. Multiplier/reducer according to Claims 1 and 4 hereinabove, **characterized in that** the lines through which the lubricant flows through the hollow lubrication shaft of the planet carrier part are implemented by means of a space defined between the inner wall of the shaft proper and an inner lining of a smaller diameter applied in this area.

6. Multiplier/reducer according to Claim 1 hereinabove, **characterized in that** the oil suctioned from the sump can be re-circulated through a filter prior to being routed to the jets.

7. Multiplier/reducer according to Claim 1 hereinabove, **characterized in that** the lines through which the lubricant flows branch out at the planet carrier stock, into at least two circuits: one on which the jets are pointed directly at the gears, and the other with lines which run through the inside of the roundhead bolts of the planet bearings and the jets of which are aimed directly at the lubrication of said bearings.

8. Multiplier/reducer according to Claim 1 hereinabove, **characterized in that** the diameter of the sun gear is smaller than the diameter of the concentric outer shaft of the shaft thereof, being equipped with a window on the planet carrier part likewise of a diameter larger than that of the aforementioned sun gear on the order of facilitating the dismantling of the sun gear and the shaft thereof by means of axial removal through the outer concentric shaft following the loosening of the contraction rings.
